# EUROPÄISCHE PATENTSCHRIFT

(11) **EP 3 028 357 B1**
(45) Veröffentlichungstag und Bekanntmachung des Hinweises auf die Patenterteilung: **07.06.2023**
(21) Anmeldenummer: 14739729.3
(22) Anmeldetag: 07.07.2014
(51) Int. Cl.: H02H 3/087, H02H 3/24, H02H 7/26, B60R 16/033

(54) **ANORDNUNG ZUR ELEKTRISCHEN ABSICHERUNG EINES POTENTIELLEN KURZSCHLUSSES BZW. EINER ÜBERLAST IN EINEM GLEICHSTROMNETZ MIT SYSTEMBEDINGTEN, VARIABLEM QUELLINNENWIDERSTAND**
ASSEMBLY FOR ELECTRICAL PROTECTION OF A POTENTIAL SHORT-CIRCUIT PATH OR AN OVERLOAD IN A DIRECT CURRENT NETWORK HAVING A SYSTEM-DETERMINED, VARIABLE SOURCE INTERNAL RESISTANCE
SYSTÈME PERMETTANT LA PROTECTION ÉLECTRIQUE PAR FUSIBLE CONTRE UN COURT-CIRCUIT POTENTIEL OU UNE SURCHARGE DANS UN RÉSEAU À COURANT CONTINU PRÉSENTANT UNE RÉSISTANCE INTÉRIEURE DE SOURCE VARIABLE DÉPENDANT DU SYSTÈME

(30) Priorität: 29.07.2013 DE 102013214726
(43) Veröffentlichungstag der Anmeldung: 08.06.2016
(73) Patentinhaber: Bayerische Motoren Werke Aktiengesellschaft, 80809 München (DE)
(72) Erfinder: ESSCHENDAL, Horst, 82287 Jesenwang (DE); KLAWITTER, Thomas, 80636 München (DE); MIEDERER, Paul, 85457 Wörth (DE); SCHMID, Helmut, 85395 Attenkirchen (DE); SCHWAIGER, Hans, 81377 München (DE)
(86) Internationale Anmeldenummer: PCT/EP2014/064392
(87) Internationale Veröffentlichungsnummer: WO 2015/014568

(56) Entgegenhaltungen:
- WO-A2-2010/003835
- DE-A1-102011 121 604
- US-A- 4 509 102
- US-A1- 2012 106 013
- US-A1- 2013 021 702

## Beschreibung

Die vorliegende Erfindung betrifft eine Anordnung zur elektrischen Absicherung eines potentiellen Kurzschlusses bzw. einer Überlast in einem Stromnetz mit systembedingten, variablem Quellinnenwiderstand sowie ein mit dieser ausgestattetes Fortbewegungsmittel. Insbesondere betrifft die vorliegende Erfindung eine Verbesserung einer mittels eines aktiven oder passiven Trennelementes, insbesondere Schmelzsicherung abgesicherte Kurzschlussstrecke in einem Bordnetz, welches durch einen elektrochemischen Energiespeicher mit Energie versorgt wird. Dieses Trennelement wird im Folgenden als erste Sicherungseinrichtung bezeichnet. Es kann beispielsweise eine Schmelzsicherung, Pyro-Fuse, o.Ä. sein.

Die Bordnetze von Fahrzeugen werden häufig durch elektrochemische Energiespeicher mit elektrischer Energie versorgt bzw. durch diese gepuffert. Dabei schwankt die Leistungsfähigkeit der elektrochemischen Energiespeicher stark mit unterschiedlichen Betriebsgrößen und Kenngrößen. Beispielsweise ist ein Alterungszustand eines elektrochemischen Energiespeichers dafür verantwortlich, dass dessen Innenwiderstand ansteigt. Zusätzlich besteht eine erhebliche Temperaturabhängigkeit des Innenwiderstandes. Die maximale vom elektrochemischen Energiespeicher abgebbare Leistung bzw. Spannung und der maximale vom elektrochemischen Energiespeicher abgebbare Strom beschränken die Energieabgabe dabei im schlechtesten Fall so erheblich, dass Überstrom- bzw. Überspannungsabsicherungsmaßnahmen mitunter zu spät oder gar nicht ansprechen. Dies wird nachfolgend am Beispiel einer Schmelzsicherung erläutert. Die Leitungsquerschnitte durch eine Schmelzsicherung abgesicherter Bordnetzabschnitte werden üblicherweise so dimensioniert, dass im Falle eines vorbestimmten Stroms auf dem Abschnitt die Schmelzsicherung zuerst anspricht, bevor elektrische Leitungen einen Schaden nahmen mitunter zu spät oder gar nicht ansprechen. Dies wird nachfolgend am Beispiel einer Schmelzsicherung erläutert. Die Leitungsquerschnitte durch eine Schmelzsicherung abgesicherter Bordnetzabschnitte werden üblicherweise so dimensioniert, dass im Falle eines vorbestimmten Stroms auf dem Abschnitt die Schmelzsicherung zuerst anspricht, bevor elektrische Leitungen einen Schaden nehmen könnten. Aufgrund elektrischer Isolationsmaßnahmen sind die Entwärmungscharakteristiken der elektrischen Leitungsabschnitte und der Schmelzsicherung stark voneinander verschieden. So kann es vorkommen, dass im Falle eines ersten (höheren) Überstroms die Schmelzsicherung hinreichend früh mit einer elektrischen Leistung versorgt wird, aufgrund eines welchen sie anspricht und die elektrische Leitung schützt. Wird jedoch über einen hinreichend langen Zeitraum ein Strom auf einem Leitungsabschnitt erzeugt, der unterhalb des Ansprechstromes der Schmelzsicherung liegt, können die elektrischen Leitungsabschnitte über Gebühr beansprucht werden, ohne dass die Schmelzsicherung selbige abzusichern vermag. Hierdurch können die elektrischen Leitungen Schaden nehmen und zudem Folgeschäden in der Peripherie erzeugen. Im Falle eines Kurzschlusses kann auch der Innenwiderstand des elektrochemischen Energiespeichers, der die für die Stromführung verwendete elektrische Energie speichert, den Kurzschlussstrom derart begrenzen, dass der Ansprechstrom für die Schmelzsicherung nicht erreicht wird. Beispielsweise kann eine gealterte, stark entladene und/oder kalte Batterie den im Kurzschlussfall fließenden Kurzschlussstrom derart begrenzen, dass auf Dauer ein Abschnitt der elektrischen Leitung anstatt der Schmelzsicherung das schwächste Glied des Bordnetzes darstellt.

DE 10 2011 121 604 A1 offenbart eine Kurzschluss- und Überstromsicherung für ein Hochvoltbatteriesystem in einem Elektro- oder Hybridfahrzeug. Ein Schutzschalter ist mit einem Messmittel zur Messung eines durch das System fließenden Betriebsstroms und einer zusätzlichen Sicherung versehen. Im Ansprechen auf das Überschreiten eines maximal zulässigen Stromanstiegs wird ein Öffnen des Schutzschalters veranlasst. Auf diese Weise wird eine potentielle Kurzschlussgefahr frühzeitig erkannt und unterbunden.

US 2013/0021702 A1 offenbart eine Eingangssteuerungsvorrichtung mit einer Unterspannungsdetektion zur Überwachung eines Einschaltstroms für digitale logische Schaltungen.

US 2012/0106013 A1, was als nächstliegender Stand der Technik gesehen wird, offenbart eine logische Kontrolleinheit zur Sicherung einer Batterie vor einem Überstrom. Ein Stromkreis wird durch eine einzelne Steuereinheit unterbrochen, die im Ansprechen auf Strom- bzw. Spannungswerte, welche dieser durch Strom- bzw. Spannungssensoren übermittelt werden, darüber entscheidet, ob der Stromkreis unterbrochen wird.

Es ist eine Aufgabe der vorliegenden Erfindung, die vorgenannten Nachteile des Standes der Technik auszuräumen.

Die Lösung der vorgenannten Aufgabe erfolgt durch die Merkmale des Anspruches 1.

Die Unteransprüche betreffen bevorzugte Weiterbildungen der Erfindung. Erfindungsgemäß wird daher eine Anordnung zur elektrischen Absicherung eines ersten Betriebszustandes gegen eine vordefinierte Belastung, wie z. B. einen Kurzschluss in einem Bordnetz mit einem elektrochemischen Energiespeicher vorgeschlagen. Das Bordnetz besteht aus Leitungsabschnitten mit unterschiedlichen Leitungsquerschnitten und den versorgten Komponenten.

Die unterschiedlichen Leitungsquerschnitte werden dabei als erster Leitungsabschnitt und zweiter Leitungsabschnitt bezeichnet, wobei der erste Leitungsabschnitt einen größeren Querschnitt besitzt und der zweite Leitungsabschnitt demgegenüber einen kleineren Querschnitt besitzt.

Es ergeben sich aus der o.g. Anordnung noch unterschiedliche Betriebszustände, welche hier als erster und zweiter Betriebszustand bezeichnet werden. Im ersten Betriebszustand kann der elektrochemische Energiespeicher einen höheren Innenwiderstand aufweisen als in einem zweiten Betriebszustand. Mit anderen Worten kann im ersten Betriebszustand der elektrochemische Energiespeicher einen geringeren Ladezustand (State of Charge, SOC) und/oder einen höheren Alterungsgrad und/oder eine niedrigere Temperatur als in dem zweiten Betriebszustand aufweisen. Mit anderen Worten wird in dem ersten Betriebszustand ein erheblich reduzierter Kurzschlussstrom zu erwarten sein, als in dem zweiten Betriebszustand, so dass die im Stromkreis der Schmelzsicherung liegenden Leitungsabschnitte im Falle eines Kurzschlusses / einer Überlast überlastet werden, da die Schmelzsicherung nicht hinreichend schnell auslöst.

Dabei ist die Auslösecharakteristik einer Schmelzsicherung, deren Festigkeitsgrenze zur Absicherung eines zweiten Leitungsabschnitts der potentiellen Kurzschlussstrecke für einen ersten Betriebszustand des Energiespeichers unzureichend dimensioniert. Mit anderen Worten wird der vorstehend in Verbindung mit dem Stand der Technik diskutierte Fall vorgesehen, dass die Schmelzsicherung nicht für alle Betriebszustände des Energiespeichers hinreichend schnell anspricht. Unter der "Festigkeitsgrenze" der Schmelzsicherung sei im Rahmen der vorliegenden Erfindung ein maximaler Strom bzw. eine maximale Leistung verstanden, bei welcher der Widerstand der Schmelzsicherung sich stark erhöht bzw. (nahezu) unendlich wird. Der zweite Leitungsabschnitt ist ein Abschnitt innerhalb der potentiellen Kurzschlussstrecke, welcher nicht für sämtliche Betriebszustände des Energiespeichers bzw. des Bordnetzes hinreichend durch die Schmelzsicherung abgesichert wird. Dies kann beispielsweise ein Leitungsabschnitt sein, der einen niedrigeren Querschnitt aufweist, als ein erster Leitungsabschnitt innerhalb der potentiellen Kurzschlussstrecke. Als "potentielle Kurzschlussstrecke" wird im Rahmen der vorliegenden Erfindung diejenige Strecke verstanden, über welche im Kurzschlussfall der Kurzschlussstrom fließt. Mit anderen Worten wird im Kurzschlussfall ein Teil der Bordnetz-Leitungen zusammen mit dem eigentlichen Kurzschluss insgesamt als Kurzschlussstrecke bezeichnet. Erfindungsgemäß wird daher eine zweite Sicherungseinrichtung vorgesehen, welche eingerichtet ist, den zweiten Leitungsabschnitt gegen eine Belastung, welche in dem ersten Betriebszustand unterhalb der Festigkeitsgrenze der Schmelzsicherung auftritt, abzusichern. Als zweite Sicherungseinrichtung kommen erfindungsgemäß unterschiedliche Maßnahmen in Betracht. Insbesondere kann eine Ansteuerung von Schützen innerhalb des Bordnetzes zum Unterbrechen des Kurzschlussstroms vorgesehen werden. Hierzu kann eine Strommessung oder Leistungsmessung für die Kurzschlussstrecke, insbesondere für den zweiten Leitungsabschnitt, durchgeführt werden, durch welche ein solcher Betriebszustand erkannt wird, der zwar den zweiten Leitungsabschnitt gefährdet, allein durch die Schmelzsicherung jedoch nicht abgefangen werden kann. Insbesondere kann die Belastung als solche erkannt werden, welche einerseits den zweiten Leitungsabschnitt tatsächlich gefährdet, und andererseits tatsächlich unterhalb der Festigkeitsgrenze der Schmelzsicherung liegt. Mit anderen Worten kann derjenige Betriebszustand durch die zweite Sicherungseinrichtung abgesichert werden, welcher aufgrund eines Nicht-Ansprechens der Schmelzsicherung eine Gefährdung des zweiten Leitungsabschnitts bedeutet. Hierzu kann die zweite Sicherungseinrichtung beispielsweise Stromsensoren in Form von Hall-Sensoren, induktiven Sensoren oder Shunts umfassen. Wird ein Strom gemessen, der in einem vordefinierten Bereich liegt, kann die zweite Sicherungseinrichtung Schütze öffnen und die Kurzschlussstrecke auf diese Weise vom elektrischen Energiespeicher trennen. Die zweite Sicherungseinrichtung umfasst weiter eine Zellunterspannungsabschaltung für den elektrochemischen Energiespeicher. Zellunterspannungsabschaltungen sind im Stand der Technik bekannt, um die elektrische Spannung von Einzelzellen eines aus mehreren Zellen zusammengesetzten elektrochemischen Energiespeichers zu überwachen und den Fall einer Unterspannung durch Abschalten des elektrochemischen Energiespeichers abzufangen. Eine erfindungsgemäße Verwendung einer Zellunterspannungsabschaltung zur Absicherung einer potentiellen Kurzschlussstrecke außerhalb des elektrischen Energiespeichers ist indes noch nicht bekannt. Selbstverständlich kann die Zellunterspannungsabschaltung erfindungsgemäß modifiziert werden. Beispielsweise kann eine zeitliche Entwicklung einer Zellspannung berücksichtigt werden, so dass ein Unterspannungsfall mit einer hohen Wahrscheinlichkeit einem unerwünschten Kurzschluss zugeordnet werden kann und der Kurzschluss daher mit hoher Wahrscheinlichkeit für die Zellunterspannung ursächlich ist. Die Zellunterspannungsabschaltung kann dabei insofern den Kurzschlussfall erkennen, als der stark überhöhte Kurzschlussstrom zu einem erhöhten Spannungsabfall am Innenwiderstand des elektrochemischen Energiespeichers bzw. der jeweiligen Zelle führt.

Zusätzlich kann eine Überstromabschaltung, umfassend eine Strommesseinrichtung, in der zweiten Sicherungseinrichtung vorgesehen sein. Die Überstromabschaltung kann (wie vorstehend ausgeführt) einen Messwert für den Kurzschlussstrom ermitteln und im Ansprechen auf ein Erkennen des ersten Betriebszustandes die Schütze des elektrochemischen Energiespeichers öffnen. Indem die Mechanismen der vorgenannten zweiten Sicherungseinrichtungen in derzeitigen Topologien zum Speicherschutz vorhanden sind, kann eine Realisierung der Erfindung durch einfache erfindungsgemäße Anpassung ihrer Ansteuerung (z.B. in Form von Softwarecode) erfolgen.

Üblicherweise ist eine Überstromabschaltung bei höheren Leistungsbereichen des elektrochemischen Energiespeichers zu erwarten, als eine Zellunterspannungsabschaltung. Insbesondere für den Fall, dass sowohl eine Unterspannungsabschaltung als auch eine Überstromabschaltung erfindungsgemäß als zweite Sicherungseinrichtung vorgesehen werden, kann weiter vorteilhaft vorgesehen werden, dass ein unterer Stromschwellwert für die Überstromabschaltung und ein oberer Spannungsschwellwert für die Zellunterspannungsabschaltung so definiert sind, dass die Ansprechbereiche der Überstromabschaltung und der Zellunterspannungsabschaltung mindestens aneinander grenzen. Die Auslösecharakteristik, zeitlichen Grenzwerte, Stromschwellen und Spannungsschwellen der Abschaltung aufgrund Überstrom- und Unterspannungsabschaltung ist dabei auf die Auslösecharakteristik der Schmelzsicherung und auf das Schaltvermögen der Trennelemente der zweiten Sicherungseinrichtung abzustimmen. So darf eine Abschaltung der zweiten Sicherungseinrichtung nicht zu früh erfolgen, um eine Überlastung der Schütze zu vermeiden und ein Auslösen der Schmelzsicherung zu ermöglichen. Gleichzeitig ist die thermische Überlastung der Leitung im Kurzschlussfall zu vermeiden. Auf diese Weise kann eine zuverlässige Absicherung der potentiellen Kurzschlussstrecke über einen breiten Arbeitsbereich des elektrochemischen Energiespeichers sichergestellt werden. Zur Verbesserung der Absicherung sollte in realen Anwendungsfällen ein Überlappen der durch die Zellunterspannungsabschaltung und die Überstromabschaltung abgesicherten Betriebszustände sichergestellt werden.

Eine mögliche und bevorzugte Dimensionierung der vorstehend genannten Anordnung gehorcht der Bedingung, dass die Gesamtanzahl in Reihe geschalteter Zellen des Energiespeichers, multipliziert mit einer minimalen Zelleinzelspannung beim Ansprechen der Zellunterspannungsabschaltung, geteilt durch einen unteren Stromgrenzwert, beim Ansprechen der Überstromerkennung größer als ein maximal anzunehmender Kurzschlusswiderstand der potentiellen Kurzschlussstrecke ist. Dabei ist unter der minimalen Zelleinzelspannung eine solche Spannung zu verstehen, welche bei einer identischen Zellspannung aller Zellen des Energiespeichers gerade eben zum Ansprechen der Zellunterspannungsabschaltung führt. Diese Spannung stellt den schlechtesten Fall dar, welcher hinsichtlich der Zellspannung während eines Kurzschlusses vorherrschen kann. Der maximal anzunehmende Kurzschlusswiderstand ist dabei derjenige Widerstand, der für die gesamte, den Kurzschlussstrom führende Strecke herrscht, und gleichzeitig als Kurzschlussfall definiert ist. Auf diese Weise ergibt sich eine besonders sichere Dimensionierung durch eine Überlappung der Ansprechbereiche der Zellunterspannungsabschaltung sowie der Überstromabschaltung.

Weiter bevorzugt ist die zweite Sicherungseinrichtung eingerichtet, eine solche Trägheit für den Ansprechfall aufzuweisen, dass einerseits die potentielle Kurzschlussstrecke zuverlässig auch ohne ein Ansprechen der Schmelzsicherung geschützt ist, und andererseits die Schmelzsicherung außerhalb des ersten Betriebszustandes vor der zweiten Sicherungseinrichtung anspricht. Da nämlich ein Ansprechen der zweiten Sicherungseinrichtung bei hohen Strömen zur Zerstörung oder abnormen Beanspruchung der Schütze führen kann, wird für hohe Ströme eine Absicherung durch Ansprechen der Schmelzsicherung bevorzugt. Zur erfindungsgemäßen Absicherung eines breiten Betriebsbereichs ist es jedoch erforderlich, unterhalb einer Festigkeitsgrenze der Schmelzsicherung zuverlässig die zweite Sicherungseinrichtung in Verbindung mit den Schützen zu verwenden.

Weiter bevorzugt ist dabei die Trägheit der zweiten Sicherungseinrichtung geeignet, einen Ansprechvorgang im Fall kurzzeitiger Stromspitzen, insbesondere auch korrespondierender kurzzeitiger Regeleingriffe, zu unterdrücken. Mit anderen Worten werden im Ansprechbereich der zweiten Sicherungseinrichtung kurzzeitige Überhöhungen jeweils definierter Schwellwerte toleriert, ohne dass die zweite Sicherungseinrichtung anspricht. So eine Dimensionierung der zweiten Sicherungseinrichtung kann dabei in Abhängigkeit als "normal" zu bewertender elektrischer Kenngrößen des jeweiligen Bordnetzes vorgenommen werden.

Weiter bevorzugt ist dabei die Trägheit der zweiten Sicherungseinrichtung geeignet einen Überlastfall oder Kurzschlussfall des ersten und zweiten Leitungsabschnittes von einem maximalen Betriebsfall des ersten Leitungsabschnittes zu unterscheiden und somit tatsächlich nur im Falle einer Überlast und/oder Kurzschlusses auszulösen.

Bevorzugt weist der zweite Leitungsabschnitt einen geringeren Leitungsquerschnitt auf als ein erster Leitungsabschnitt derselben Kurzschlussstrecke. Hierdurch ist der zweite Leitungsabschnitt elektrisch schwächer dimensioniert und bildet gegenüber dem ersten Leitungsabschnitt einen solchen Abschnitt, der im Falle eines Kurzschlussstromes mit hoher Wahrscheinlichkeit stärker gefährdet ist. Gemäß einem weiteren Aspekt der vorliegenden Erfindung wird ein Fortbewegungsmittel, umfassend einen elektrochemischen Energiespeicher und eine vorstehend diskutierte Anordnung, vorgeschlagen. Das Fortbewegungsmittel kann beispielsweise ein elektrisch antreibbares Fahrzeug (PHEV, HEV, EV etc.) sein. Dabei kann der elektrochemische Energiespeicher als Traktionsbatterie und zumindest ein Teil der potentiellen Kurzschlussstrecke als Teil eines zur Verteilung der Traktionsenergie eingerichteten Bordnetzabschnittes eingerichtet sein.

Weitere Einzelheiten, Merkmale und Vorteile der Erfindung ergeben sich aus der nachfolgenden Beschreibung und den Figuren. Es zeigen:
- Figur 1: ein Diagramm zu erfindungsgemäß verwendeten Stromüberwachungsmechanismen in Form einer Abschaltzeit des jeweiligen Sicherungsmechanismus' über einem Strom durch den Hochvoltspeicher; und
- Figur 2: eine mögliche Topologie eines Bordnetzes, umfassend ein Ausführungsbeispiel einer erfindungsgemäßen Anordnung.

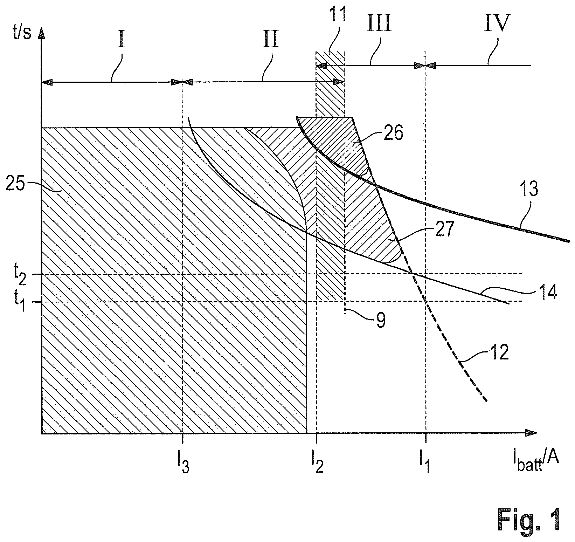

Figur 1 zeigt die Abschaltzeit t aufgetragen über einen Strom I_{batt} des Hochvoltspeichers (elektrochemischer Energiespeicher). In einem ersten Bereich I des elektrochemischen Energiespeichers ist ein Kurzschlussstrom I_{batt} unterhalb einer Grenze I3 so gering, dass sämtliche Leitungsabschnitte der potentiellen Kurzschlussstrecke unbeschadet bleiben. Mit anderen Worten ist keine der erfindungsgemäß vorzusehenden Sicherungseinrichtungen eingerichtet, diesen Betriebsbereich abzusichern. Dies bedeutet selbstverständlich nicht, dass ein Kurzschlussstrom in diesem Bereich sinnvollerweise hingenommen werden sollte. Lediglich eine Absicherung gegenüber Überhitzung und etwaigen Folgeschäden ist nicht erforderlich. Ein Betriebsbereich IV ist in herkömmlicher Weise durch eine Schmelzsicherung abgesichert. Die entsprechende Kennlinie 12 zur Festigkeit der Schmelzsicherung beschreibt die Abschaltzeit t über dem Strom I_{batt}. Die Kennlinie 13 beschreibt die Überlastgrenze des ersten Leitungsabschnittes, mit anderen Worten beispielsweise eine Leitung mit einem Querschnitt von 35 mm². Oberhalb des Schnittpunktes der Sicherungskennlinie 12 und der Leitungskennlinie 13 wird diese Leitung im Überlast- oder Kurzschlussfall thermisch überlastet, da die Schmelzsicherung in diesem Bereich 26 nicht sicher auslöst. Die Kennlinie 14 beschreibt die Überlastgrenze des zweiten Leitungsabschnittes, mit anderen Worten beispielsweise eine Leitung mit einem Querschnitt von 16 mm². Oberhalb des Schnittpunktes der Sicherungskennlinie 12 und der Leitungskennlinie 14 wird diese Leitung im Überlast oder Kurzschlussfall thermisch überlastet, da die Schmelzsicherung in diesem Bereich 27 nicht sicher auslöst. Unter Berücksichtigung einer gewissen Ansprechzeit, welche zwischen t₁ und t₂ liegt, ist daher ein Bereich unterhalb dieser kritischen Kennfeldpunkte (Hochvoltspeicherströme I_{batt}) als Bereich III mittels der Überstromerkennung als Bestandteil der zweiten Sicherungseinrichtung abzusichern. Dieser Bereich erstreckt sich zwischen den Strömen I2 und 11. Für noch niedrigere Ströme, mit anderen Worten Ströme zwischen I3 und I2 kann erfindungsgemäß die Zellunterspannungsabschaltung als Bestandteil der zweiten Sicherungseinrichtung verwendet werden. Die Abschaltzeit der zweiten Sicherungseinrichtung ist derart dimensioniert, dass die maximal zulässige Abschaltzeit t₂ zum Schutz des schwächsten Leitungsabschnittes nicht überschritten wird und gleichzeitig eine minimale Zeit t₁ überschritten ist, um eine Überlast der Schütze zu vermeiden und ein Auslösen der Schmelzsicherung zu ermöglichen. Diese zeitliche Charakteristik der zweiten Sicherungseinrichtung ist dadurch begründet, dass der sich einstellende Überlast- bzw. Kurzschlussstrom in seiner sich endgültig einstellenden Höhe zunächst unbekannt ist. Der untere Grenzwert der Überstromerkennung I2 muss größer als der Betriebsbereich des ersten Leitungsabschnittes 25 definiert werden. Die obere Grenze der Unterspannungsabschaltung 9 liegt oberhalb der minimalen Grenze der Überstromabschaltung I2, so dass sich ein überlappender Bereich 11 ergibt.

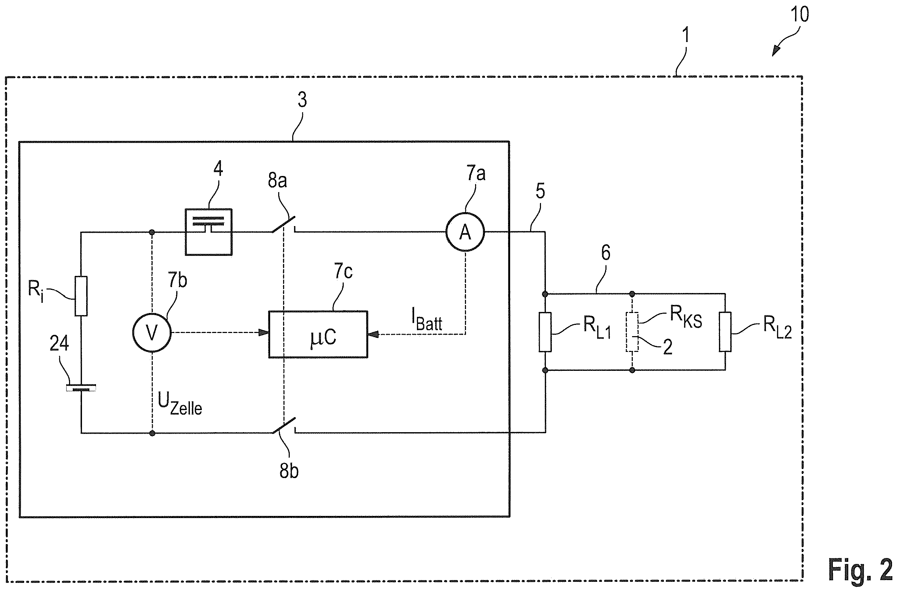

Fig. 2 zeigt ein Bordnetz 10 als Stromnetz. Dieses umfasst eine Hochvoltbatterie 3 als elektrochemischen Energiespeicher. Innerhalb der Hochvoltbatterie 3 ist ein Trennelement (z.B. eine Schmelzsicherung) 4 in Reihe zu einer elektrochemischen Zelle 24 dargestellt, wobei die elektrochemische Zelle 24 lediglich symbolisch für eine Vielzahl elektrochemischer Zellen steht. Ein oder mehrere Trennelemente (z.B. Schütze) 8a, 8b sind eingerichtet, von der elektrochemischen Zelle 24 abgehende elektrische Leitungen an die Peripherie anzuschließen bzw. von dieser zu trennen. Weiter umfasst die Hochvoltbatterie einen Stromsensor 7a und einen Spannungssensor 7b, wobei der Spannungssensor 7b lediglich symbolisch zu verstehen ist. Er kann für eine Vielzahl von Zelleinzelspannungsmessungen oder auch als Gesamt- bzw. Teilspannungsmessung stehen. Strom und Spannungswerte der Sensoren 7a und 7b werden von einem in der Hochvoltbatterie 3 integrierten Microcontroller 7c ausgewertet. Der Microcontroller 7c steuert die Schütze 8a, 8b zum Trennen bzw. Verbinden der elektrischen Leitungen 5, 6 von der elektrochemischen Zelle 24. Elektrische Verbraucher R_{L1} und R_{L2} sind über elektrische Leitungen mit der HochvoltBatterie 3 verbunden. Exemplarisch ist ein zweiter Leitungsabschnitt 6 dargestellt, welcher über einen ersten Leitungsabschnitt 5 von der Hochvoltbatterie 3 stammende elektrische Energie an den ersten Verbraucher R_{L2} führen sollte. Aufgrund des Kurzschlusses R_{KS} ergibt sich eine Kurzschlussstrecke über die Leitungsabschnitte 5 und 6, über welche ein Kurzschlussstrom fließt. Sofern die elektrischen Zellen 24 der Hochvoltbatterie 3 in einem Betriebszustand sind, in welchem selbst bei einem Kurzschluss innerhalb des zweiten Leitungsabschnitts 6 der sich einstellende Kurzschlussstrom nicht ausreicht, die Schmelzsicherung 4 rechtzeitig ansprechen zu lassen, kann mittels des Stromsensors 7a oder der Zellspannungsmessung 7b der Microcontroller 7c in Verbindung mit den Schützen 8a, 8b als zweite Sicherungseinrichtung der Kurzschlussstrom durch Öffnen der Schütze 8a, 8b unterbrochen werden.

### Bezugszeichenliste:

- 1: Anordnung
- 2: Kurzschlussstrecke
- 3: Hochvoltbatterie
- 4: Schmelzsicherung
- 5: Erster Leitungsabschnitt
- 6: Zweiter Leitungsabschnitt
- 7a: Stromsensor
- 7b: Spannungssensor
- 7c: Microcontroller
- R_{L1}: Elektrischer Verbraucher im ersten Leitungsabschnitt
- R_{L2}: Elektrischer Verbraucher im zweiten Leitungsabschnitt
- R_{KS}: Kurzschlusswiderstand
- Ri: Variabler Innenwiderstand des elektrochemischen Speicher / Hochvoltbatterie
- 8a, b: Schütze
- 9: Obere Grenze der Unterspannungserkennung für einen maximalen Widerstand im Überlastpfad
- 10: Bordnetz
- 11: Überlappungsbereich der Unterspannungs- und Überstromerkennung
- 12: Auslösekennlinie der Schmelzsicherung 4
- 13: Grenzkurve des ersten Leitungsabschnitt
- 14: Grenzkurve des zweiten Leitungsabschnitt
- 24: Elektrochemische Zelle
- 25: Maximaler Betriebsbereich der im ersten Leitungsabschnitt angeschlossenen elektrischen Verbraucher
- 26: Über Schmelzsicherung nicht abgesicherter Bereich des ersten Leitungsabschnittes.
- 27: Über Schmelzsicherung nicht abgesicherter Bereich des zweiten Leitungsabschnittes.
- l1: Maximal schaltbarer Strom des Leitungsschalters / Schütze
- l2: Unterer Grenzwert der Überstromerkennung
- l3: Maximaler stationärer Betriebsstrom des zweiten Leitungsabschnittes
- t1: Mindestdauer bis zum Eingreifen der Abschaltmechanismen
- t2: Maximal zulässige Abschaltzeit

## Patentansprüche

1. Anordnung (1) zur elektrischen Absicherung eines ersten Betriebszustandes in einem Stromnetz (10) mit systembedingtem, alterungsbedingt und temperaturbedingt variablem, Quelleninnenwiderstand einer Hochvolt-Traktionsbatterie (3) für ein elektrisch antreibbares Fortbewegungsmittel umfassend:
- eine erste Sicherungseinrichtung (4) in Form einer Schmelzsicherung, deren Ansprechverhalten zur Absicherung des Stromnetzes (10) zwar in einem zweiten Betriebszustand, nicht aber in dem ersten Betriebszustand gegen eine vordefinierte Belastung ausreichend ist, wobei die Traktionsbatterie (3) im ersten Betriebszustand einen höheren Quelleninnenwiderstand aufweist als im zweiten Betriebszustand, und
- eine zweite Sicherungseinrichtung (7a, 7b, 7c, 8a, 8b), welche eingerichtet ist, das Stromnetz (10) gegen die Belastung, welche in dem ersten Betriebszustand unterhalb des Ansprechverhaltens der ersten Sicherungseinrichtung (4) auftritt, abzusichern, wobei die zweite Sicherungseinrichtung (7a, 7b, 7c, 8a, 8b)
- eine Unterspannungsabschaltung umfassend eine Spannungsmesseinrichtung (7b, 7c) für die Traktionsbatterie (3) umfasst, **dadurch gekennzeichnet, dass** die zweite Sicherungseinrichtung (7a, 7b, 7c, 8a, 8b) eingerichtet ist im Ansprechfall ein Trennelement in Form eines Schützes (8a, 8b) zum Trennen der Traktionsbatterie (3) vom Stromnetz (10) zu öffnen, wobei die zweite Sicherungseinrichtung (7a, 7b, 7c, 8a, 8b) weiter
- eine Überstromabschaltung umfassend eine Strommesseinrichtung (7a, 7c) umfasst und wobei ein Stromschwellwert (I2) für die Überstromabschaltung und ein Spannungsschwellwert für die Unterspannungsabschaltung über einem Strom (I_{batt}) durch die Hochvolt-Traktionsbatterie (3) und den Quelleninnenwiderstand der Hochvolt-Traktionsbatterie (3) so definiert sind, dass die Ansprechbereiche (II, III) der Überstromabschaltung und der Unterspannungsabschaltung über dem Strom (I_{batt}) durch die Hochvolt-Traktionsbatterie (3) mindestens aneinander grenzen, sich insbesondere überlappen (11),
wobei die Traktionsbatterie (3) in Reihe geschaltete Zellen aufweist und die Gesamtanzahl in Reihe geschalteter Zellen der Traktionsbatterie (3) multipliziert mit einer minimalen Zelleinzelspannung beim Ansprechen der Unterspannungsabschaltung geteilt durch einen unteren Stromschwellwert (I2) beim Ansprechen der Überstromabschaltung größer als ein maximal anzunehmender Kurzschlusswiderstand einer potentiellen Kurzschlussstrecke (2) ist,
wobei ein zweiter Leitungsabschnitt (6) einen geringeren Leitungsquerschnitt aufweist als ein erster Leitungsabschnitt (5) der potentiellen Kurzschlussstrecke (2), und wobei die Festigkeitsgrenze der ersten Sicherungseinrichtung (4) zur Absicherung des zweiten Leitungsabschnitts (6) in dem ersten Betriebszustand der Traktionsbatterie (3) unzureichend dimensioniert ist.

2. Anordnung nach Anspruch 1, wobei die zweite Sicherungseinrichtung (7a, 7b, 7c, 8a, 8b) eingerichtet ist, eine solche Trägheit für den Ansprechfall aufzuweisen, dass einerseits die potentielle Kurzschlussstrecke (2) zuverlässig auch ohne ein Ansprechen der ersten Sicherungseinrichtung (4) geschützt ist, und dass andererseits die erste Sicherungseinrichtung (4) außerhalb des ersten Betriebszustandes vor der zweiten Sicherungseinrichtung (7a, 7b, 7c, 8a, 8b) anspricht.

3. Anordnung nach Anspruch 2, wobei eine Trägheit der zweiten Sicherungseinrichtung (7a, 7b, 7c, 8a, 8b) geeignet ist, einen Ansprechvorgang im Fall kurzzeitiger Stromspitzen, insbesondere auch korrespondierender kurzzeitiger Regeleingriffe, zu unterdrücken.

4. Fortbewegungsmittel umfassend eine Traktionsbatterie (3) und eine Anordnung (1) nach einem der vorstehenden Ansprüche.

## Claims

1. Arrangement (1) for electrically safeguarding a first operating state in a power grid (10) with a system-induced source internal resistance, which varies in an ageing-induced and temperature-induced manner, of a high-voltage traction battery (3) for an electrically driveable means of transportation, comprising:
- a first protective device (4) in the form of a fuse, the response behaviour of which is sufficient to safeguard the power grid (10) against a predefined load in a second operating state, but not in the first operating state, wherein the traction battery (3) has a higher source internal resistance in the first operating state than in the second operating state, and
- a second protective device (7a, 7b, 7c, 8a, 8b) that is designed to safeguard the power grid (10) against the load that occurs below the response behaviour of the first protective device (4) in the first operating state, wherein the second protective device (7a, 7b, 7c, 8a, 8b)
- comprises an undervoltage cut-off comprising a voltage measuring device (7b, 7c) for the traction battery (3), **characterized in that** the second protective device (7a, 7b, 7c, 8a, 8b) is designed, in the case of a response, to open an isolating element in the form of a contactor (8a, 8b) so as to isolate the traction battery (3) from the power grid (10), wherein the second protective device (7a, 7b, 7c, 8a, 8b) also
- comprises an overcurrent cut-off comprising a current measuring device (7a, 7c), and wherein a current threshold value (12) for the overcurrent cut-off and a voltage threshold value for the undervoltage cut-off, over a current (I_{batt}) through the high-voltage traction battery (3) and the source internal resistance of the high-voltage traction battery (3), are defined such that the response ranges (II, III) of the overcurrent cut-off and the undervoltage cut-off, over the current (I_{batt}) through the high-voltage traction battery (3), at least adjoin one another, in particular overlap one another (11), wherein the traction battery (3) has series-connected cells and the total number of series-connected cells of the traction battery (3), multiplied by a minimum cell individual voltage in the case of a response of the undervoltage cut-off, divided by a lower current threshold value (12) in the case of a response of the overcurrent cut-off, is greater than a maximum short-circuit resistance which can be assumed for a potential short-circuit path (2), wherein a second line section (6) has a smaller line cross section than a first line section (5) of the potential short-circuit path (2), and wherein the strength limit of the first protective device (4) is inadequate for safeguarding the second line section (6) in the first operating state of the traction battery (3).

2. Arrangement according to Claim 1, wherein the second protective device (7a, 7b, 7c, 8a, 8b) is designed to have such an inertia in the case of a response that, on the one hand, the potential short-circuit path (2) is reliably protected even without a response from the first protective device (4) and that, on the other hand, outside of the first operating state, the first protective device (4) responds before the second protective device (7a, 7b, 7c, 8a, 8b).

3. Arrangement according to Claim 2, wherein an inertia of the second protective device (7a, 7b, 7c, 8a, 8b) is suitable for suppressing a response process in the case of brief current peaks, in particular even corresponding brief regulating interventions.

4. Means of transportation, comprising a traction battery (3) and an arrangement (1) according to one of the preceding claims.

## Revendications

1. Arrangement (1) de protection électrique d'un premier état opérationnel dans un réseau électrique (10) avec une résistance interne de source, variable en fonction du système, en fonction du vieillissement et fonction de la température, d'une batterie de traction à haute tension (3) pour un moyen de transport pouvant être propulsé électriquement, comprenant :
- un premier dispositif de sécurité (4) sous la forme d'un fusible dont le comportement de déclenchement en vue de protéger le réseau électrique (10) contre une charge prédéfinie est, il est vrai, suffisant dans un deuxième état opérationnel, mais pas dans le premier état opérationnel, la batterie de traction (3) présentant, dans le premier état opérationnel, une résistance interne de source plus élevée que dans le deuxième état opérationnel, et
- un deuxième dispositif de sécurité (7a, 7b, 7c, 8a, 8b), lequel est conçu pour protéger le réseau électrique (10) contre la charge qui, dans le premier état opérationnel, se produit au-dessous du comportement de déclenchement du premier dispositif de sécurité (4), le deuxième dispositif de sécurité (7a, 7b, 7c, 8a, 8b) comprenant un dispositif de mesure de tension (7b, 7c) pour la batterie de traction (3), **caractérisé en ce que** le deuxième dispositif de sécurité (7a, 7b, 7c, 8a, 8b) est conçu pour, en cas de déclenchement, ouvrir un élément sectionneur sous la forme d'un contacteur (8a, 8b) en vue de séparer la batterie de traction (3) du réseau électrique (10), le deuxième dispositif de sécurité (7a, 7b, 7c, 8a, 8b) comprenant en outre
- un élément de déconnexion par surintensité comprenant un dispositif de mesure de courant (7a, 7c) et une valeur de seuil de courant (12) pour la déconnexion de surintensité et une valeur de seuil de tension pour l'élément de déconnexion par tension insuffisante sur un courant (I_{batt}) à travers la batterie de traction à haute tension (3) et la résistance interne de source de la batterie de traction à haute tension (3) étant définies de telle sorte que les plages de déclenchement (II, III) de l'élément de déconnexion par surintensité et de l'élément de déconnexion par tension insuffisante sur le courant (I_{batt}) à travers la batterie de traction à haute tension (3) sont au moins adjacentes l'une à l'autre, notamment se chevauchent (11),
la batterie de traction (3) possédant des cellules branchées en série et le nombre total de cellules branchées en série de la batterie de traction (3), multiplié par une tension de cellule individuelle minimale lors du déclenchement de l'élément de déconnexion par tension insuffisante divisée par une valeur de seuil de courant inférieure (2) lors du déclenchement de l'élément de déconnexion par surintensité, étant supérieur à une résistance de court-circuit maximale à supposer d'un trajet de court-circuit potentiel (2),
une deuxième portion de ligne (6) présentant une section de ligne plus faible qu'une première section de ligne (5) du trajet de court-circuit potentiel (2), et le point de rupture du premier dispositif de sécurité (4) pour la protection de la deuxième portion de ligne (6) dans le premier état opérationnel de la batterie de traction (3) étant insuffisamment dimensionné.

2. Arrangement selon la revendication 1, le deuxième dispositif de sécurité (7a, 7b, 7c, 8a, 8b) étant conçu pour présenter une inertie telle pour le cas de déclenchement que, d'une part, le trajet de court-circuit potentiel (2) est protégé de manière fiable même en l'absence de déclenchement du premier dispositif de sécurité (4) et en ce que d'autre part, le premier dispositif de sécurité (4), en-dehors du premier état opérationnel, se déclenche avant le deuxième dispositif de sécurité (7a, 7b, 7c, 8a, 8b).

3. Arrangement selon la revendication 2, une inertie du deuxième dispositif de sécurité (7a, 7b, 7c, 8a, 8b) étant appropriée pour inhiber un comportement de déclenchement dans le cas de pointes de courant de courte durée, notamment aussi des interventions de régulation de courte durée correspondantes.

4. Moyen de transport comprenant une batterie de traction (3) et un arrangement (1) selon l'une des revendications précédentes.
